# EUROPÄISCHE PATENTSCHRIFT

(11) **EP 0 958 967 B1**
(45) Veröffentlichungstag und Bekanntmachung des Hinweises auf die Patenterteilung: **09.07.2003**
(21) Anmeldenummer: 99107989.8
(22) Anmeldetag: 22.04.1999
(51) Int. Cl.: B60R 19/24, B60R 19/26, B60R 19/38

(54) **Vorrichtung zum Anbringen eines ersten Bauteils an einem zweiten Bauteil, insbesondere zum Anbringen eines Stossfängerträgers am Rahmen eines Kraftfahrzeug**
Method for fitting a first component onto a second component, in particular a bumper beam onto a vehicle frame
Dispositif de pose d'un premier composant sur un deuxième composant, d'une poutre de pare-chocs sur un chassis de véhicule en particulier

(30) Priorität: 22.05.1998 DE 19823017
(43) Veröffentlichungstag der Anmeldung: 24.11.1999
(73) Patentinhaber: Euromotive Gesellschaft m.b.H., 5282 Ranshofen (AT)
(72) Erfinder: Garnweidner, Peter, 5112 Lamprechtshausen 429a (AT)
(74) Vertreter: WILHELMS, KILIAN & PARTNER Patentanwälte

(56) Entgegenhaltungen:
- EP-A- 0 806 322
- DE-C- 4 333 695
- PATENT ABSTRACTS OF JAPAN vol. 009, no. 117 (M-381), 22. Mai 1985 (1985-05-22) -& JP 60 004444 A (HONDA GIKEN KOGYO KK), 10. Januar 1985 (1985-01-10)

## Beschreibung

Die Erfindung betrifft eine Vorrichtung zum Anbringen eines ersten C-förmigen Bauteils an einem zweiten Bauteil, insbesondere zum Anbringen eines Stoßfängerträgers am Rahmen eines Kraftfahrzeuges nach dem Gattungsbegriff des Patentanspruchs 1.

Eine derartige Vorrichtung ist aus der EP-A-0 806 322 bekannt.

Aus der DE 43 05 887 C1 ist eine weitere Vorrichtung zum Anbringen eines ersten C-förmigen Bauteils an einem zweiten Bauteil insbesondere zum Anbringen eines Stoßfängerträgers am Rahmen eine Kraftfahrzeuges bekannt, die als Einstellelement einen hohlen Gewindebolzen umfasst, der mit seinem Außengewinde in ein Innengewinde des zweiten Bauteils geschraubt ist und durch den eine Befestigungsschraube führt, wobei im Inneren des hohlen Gewindebolzens ein Klemmteil vorgesehen ist, das bis zu einer festgelegten Gegenkraft die Drehbewegung der Befestigungsschraube beim Einschrauben in den hohlen Gewindebolzen auf diesen überträgt. Durch diese Ausbildung ist es möglich, eine Einstellung des hohlen Gewindebolzens in axialer Richtung beim Einschrauben der Befestigungsschraube vorzunehmen.

Eines der wichtigsten Qualitätskriterien bei modernen Fahrzeugen wird darin gesehen, daß ein möglichst kleiner und konstanter Spalt zwischen den außen sichtbaren Karosserieteilen besteht. Ein derartiger zu optimierender Spalt ist beispielsweise der Übergang vom Stoßfängerüberzug zu den metallischen Karosserieteilen, beispielsweise den Kotflügeln und der Frontklappe bzw. der Heckklappe. Abgesehen von der Optimierung derartiger Spalten soll die sichtbare Fläche möglichst glatt sein, das heißt sollen keine abgedeckten Löcher erkennbar sein.

Um das zu erreichen, muß der Stoßfängerüberzug zu den zugehörigen Karosserieteilen entsprechend positioniert werden und muß der hinter dem Stoßfängerüberzug befindliche Stoßfängerträger, der in der Regel als Biegeträger aus einem metallischen Material oder aus einem verstärkten Kunststoffmaterial ausgebildet ist, ohne Spalt am Stoßfängerüberzug anliegend angeordnet werden, wobei er dennoch fest mit beispielsweise einem Längsträger der Karosserie verbunden sein muß.

Da die Rohkarosserie insbesondere hinsichtlich der Längsträgerposition jedoch große Fertigungstoleranzen aufweist, sind entsprechende Einstellungen erforderlich, die mit einem einzigen einteiligen Einstellelement, das bei der bekannten Vorrichtung nach der DE 43 05 887 C1 vorgesehen ist, nicht erzielbar sind.

Die der Erfindung zugrunde liegende Aufgabe besteht daher darin, die Vorrichtung nach dem Gattungsbegriff des Patentanspruchs 1 so auszubilden, daß die beiden aneinander anzubringenden Bauteile optimal positioniert werden können.

Diese Aufgabe wird gemäß der Erfindung durch die Ausbildung gelöst, die im Patentanspruch 1 angegeben ist. Besonders bevorzugte Weiterbildungen und Ausgestaltungen der erfindungsgemäßen Vorrichtung sind Gegenstand der Patentansprüche 2 bis 5.

Im folgenden wird anhand der zugehörigen Zeichnung ein besonders bevorzugtes Ausführungsbeispiel der erfindungsgemäßen Vorrichtung näher beschrieben. Es zeigen
Fig. 1 eine Axialschnittansicht des Ausführungsbeispiels ohne Befestigungsschraube,
Fig. 2 eine Fig. 1 entsprechende Axialschnittansicht mit teilweise eingeschraubter Befestigungsschraube,
Fig. 3 eine Fig. 1 entsprechende Axialschnittansicht mit fast vollständig eingeschraubter Befestigungsschraube,
Fig. 4 eine Fig. 1 entsprechende Axialschnittansicht, die den Montageendzustand zeigt, und
Fig. 5 in einer vergrößerten Axialschnittansicht die Ausbildung einer Kugelscheibe im einzelnen.

Bei dem in der Zeichnung dargestellten Ausführungsbeispiel der Vorrichtung zum Anbringen eines ersten C-förmigen Bauteils an einem zweiten Bauteil handelt es sich um den Anwendungsfall der Anbringung eines Stoßfängerträgers 1 am Rahmen eines Kraftfahrzeuges. Insbesondere ist der Stoßfängerträger 1 an einem Bauteil 2 einer stoßenergieabsorbierenden Einrichtung anzubringen, das aus einem rohrartigen Element bestehen kann. Stoßenergieabsorbierende Einrichtungen dieser Art sind an sich bekannt.

Zwischen den beiden Schenkeln des Stoßfängerträgers 1 sind der Reihe nach von unten nach oben ein erster hohler Gewindebolzen 4 und ein zweiter hohler Gewindebolzen 3 angeordnet, die mit ihren Außengewinden 5, 6 in eine Hülse 13 geschraubt sind, die entsprechende komplementäre Innengewinde aufweist und mit dem Bauteil 2 der stoßenergieabsorbierenden Einrichtung fest verbunden ist.

Im Inneren der beiden hohlen Gewindebolzen 3 und 4 sind Mitnehmerelemente, beispielsweise in Form von ringartigen Mitnehmergummis 10 und 11, angeordnet, die in einem Reibkontakt mit der Innenwand der hohlen Gewindebolzen 3, 4 stehen.

Durch die Gewindebolzen 3, 4 und die im Inneren der Gewindebolzen 3, 4 angeordneten Mitnehmergummis 10, 11 führt eine Befestigungsschraube 12, die sich von der Außenseite eines Schenkels des Stoßfängerträgers 1 bis in eine Montagemutter 9 erstreckt, die an der Außenseite des anderen Schenkels des Stoßfängerträgers 1 angeordnet ist.

Die Außengewinde 5, 6 der Gewindebolzen 3, 4 haben entgegengesetzte Gewinderichtungen, derart, daß ihre Drehung in dieselbe Richtung zu einer Bewegung der Gewindebolzen 3, 4 voneinander weg und auf die Schenkel des Stoßfängerträgers 1 zu führt.

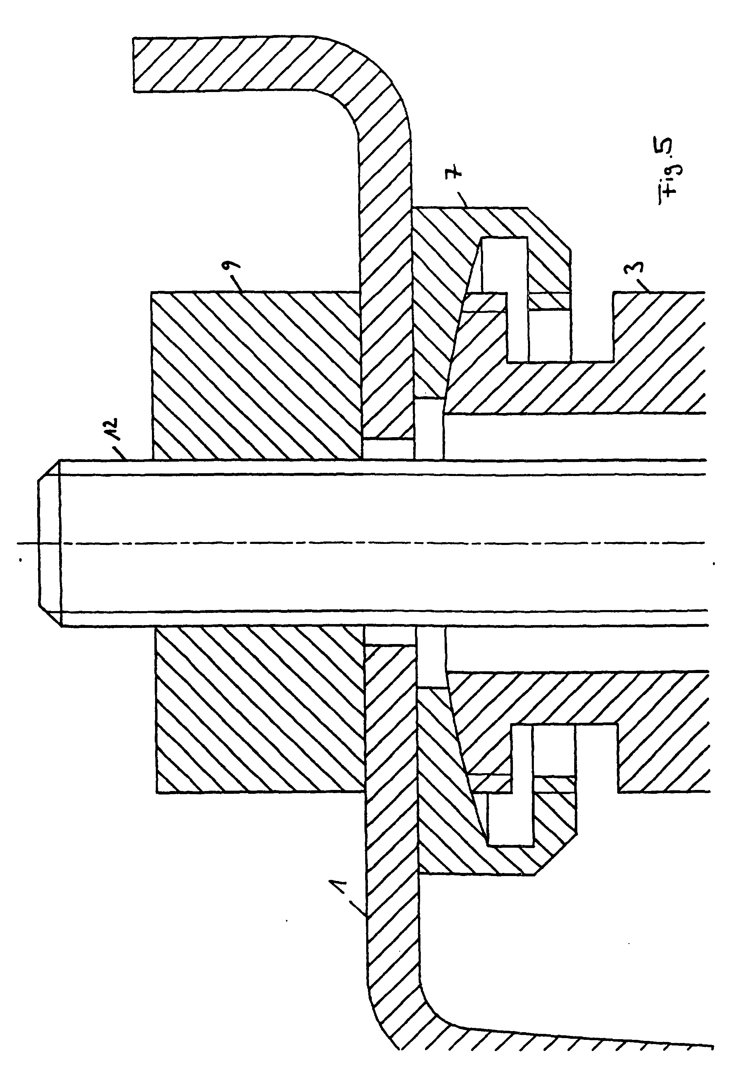

An den stoßfängerträgerseitigen Enden der Gewindebolzen 3, 4 sind weiterhin Kugelscheiben 7, 8 angeordnet, deren Öffnungen einen Durchmesser haben, der größer als der Durchmesser des Schaftes der Befestigungsschraube 12 ist. Die Kugelscheiben 7, 8 sind mit einer Montage- bzw. Verliersicherung ausgebildet, die im einzelnen in Fig. 5 dargestellt ist und später beschrieben wird.

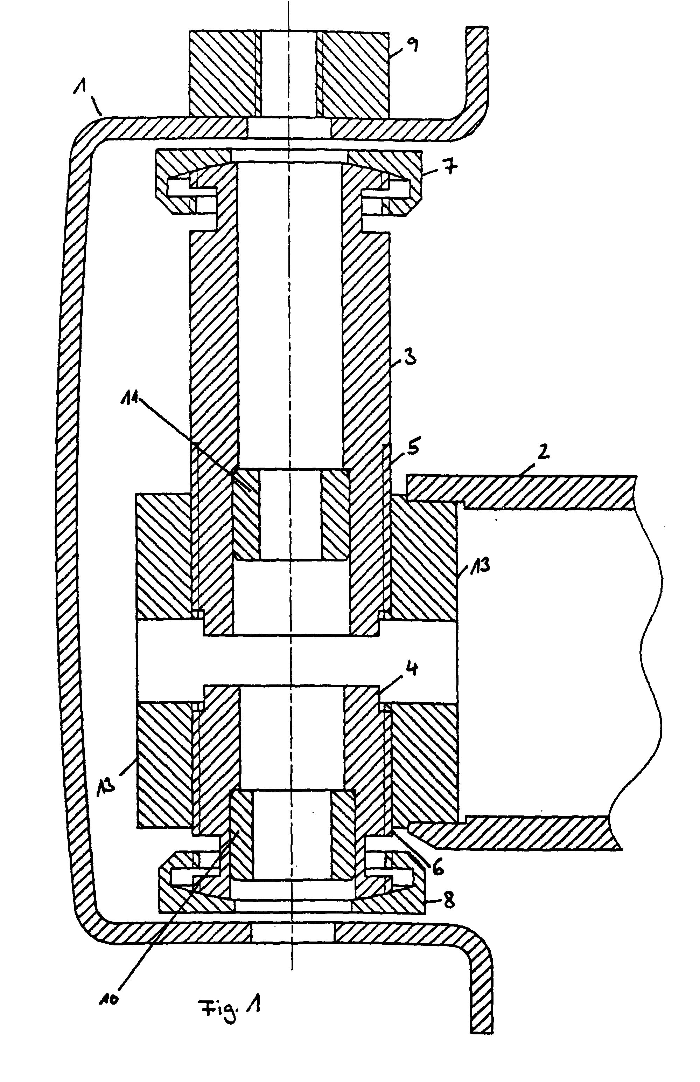

Im folgenden wird anhand der Fig. 1 bis 4 die Montage des Stoßfängerträgers 1 am Rahmen des Kraftfahrzeuges näher beschrieben.

Wie es in Fig. 1 dargestellt ist, werden zunächst die Gewindebolzen 3, 4 mit ihren Mitnehmergummis 10, 11 und den bereits vormontierten Kugelscheiben 7, 8 in die Hülse 13 des rohrartigen Bauelementes 2 der stoßenergieabsorbierenden Einrichtung geschraubt, derart, daß die Gesamthöhe dieser Anordnung kleiner als der Innenabstand zwischen den Schenkeln des C-förmigen Stoßfängerträgers 1 ist. Die Montagemutter 9 wird an der Außenseite eines der beiden Schenkeln des Stoßfängerträgers 1 angeordnet.

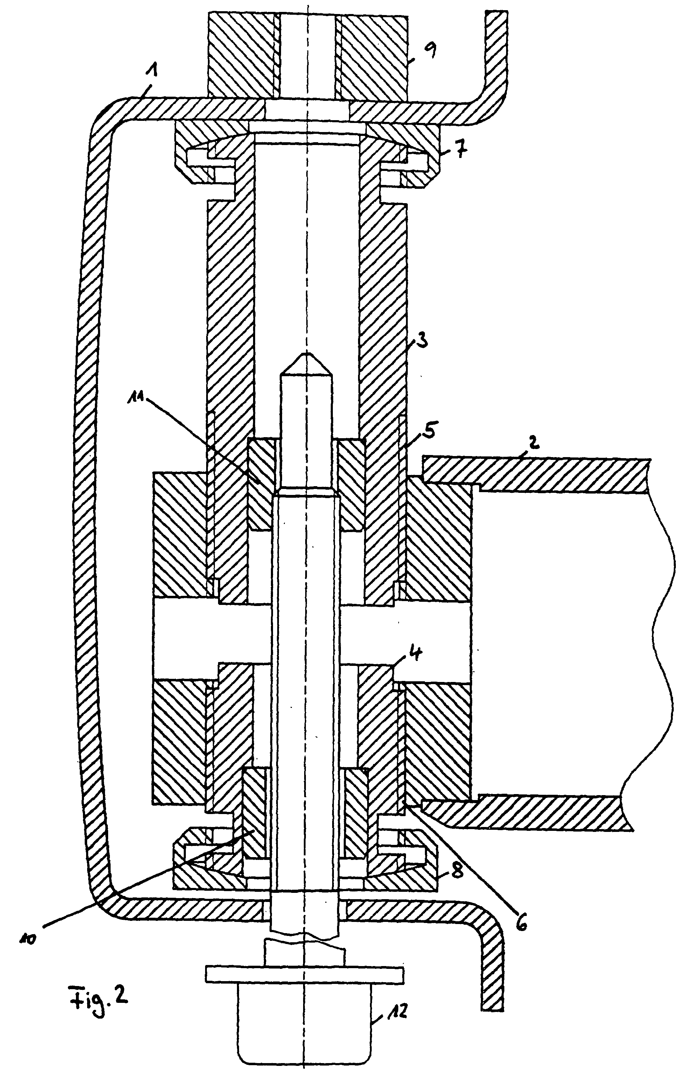

Anschließend wird die Befestigungsschraube 12 von der Außenseite des anderen Schenkels des Stoßfängerträgers 1 durch die Kugelscheibe 8, den Mitnehmergummi 10, den Gewindebolzen 4, den Mitnehmergummi 11 und den Gewindebolzen 3 eingeschraubt. Bei dieser Schraubbewegung wird über den Mitnehmergummi 11 zunächst der Gewindebolzen 3 mitgedreht, so daß er sich nach oben, das heißt in Richtung auf die Innenseite des oberen Schenkels des Stoßfängerträgers 1, bewegt, bis er dort mit seiner Kugelscheibe 7 zur Anlage kommt. Diese Stellung ist in Fig. 2 dargestellt.

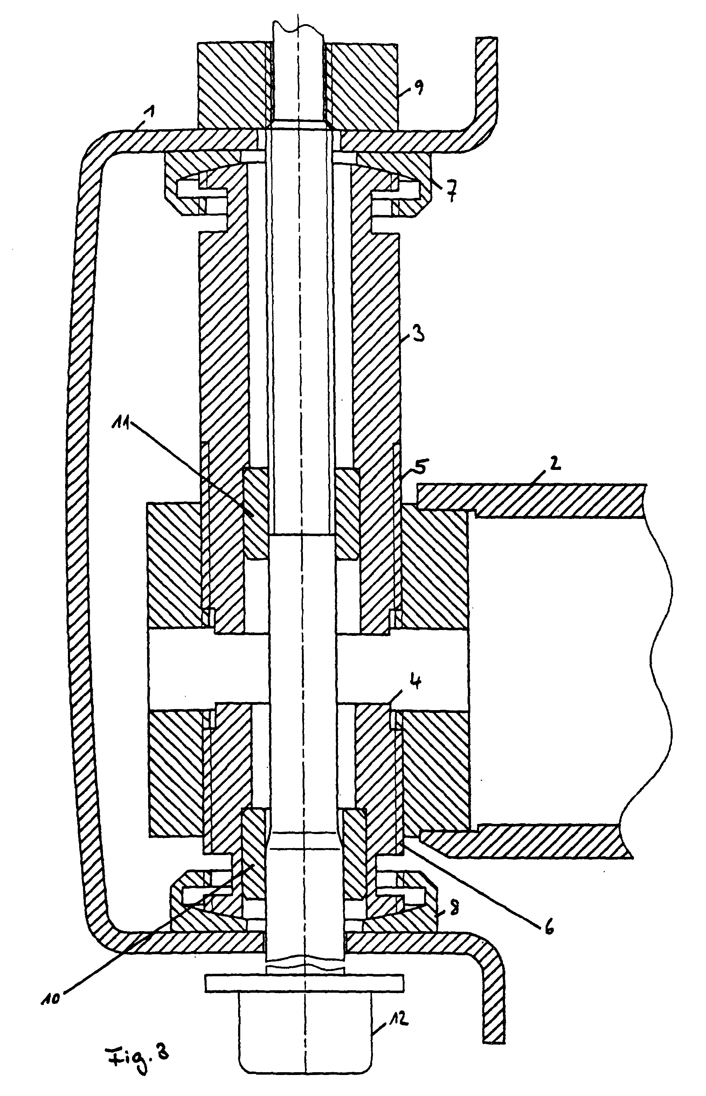

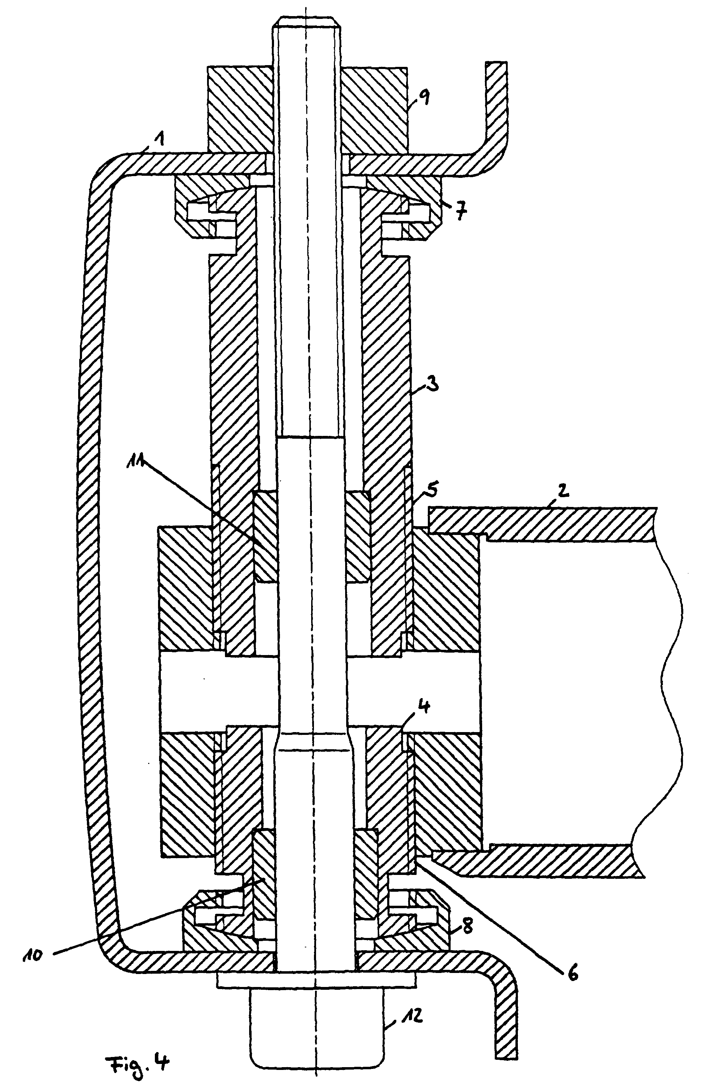

Wie es in Fig. 3 dargestellt ist, wird anschließend bei einer fortgesetzten Einschraubbewegung der Befestigungsschraube 12 der andere Gewindebolzen 4 über den Mitnehmergummi 10 mitgedreht, so daß er sich aufgrund der Richtung seines Außengewindes 6 in die entgegengesetzte Richtung zum Gewindebolzen 3, das heißt gegen die Innenfläche des anderen, unteren Schenkels des Stoßfängerträgers 1, bewegt, bis er dort mit seiner Kugelscheibe 8 zur Anlage kommt. Anschließend dreht sich die Befestigungsschraube 12 in die Montagemutter 9, bis der Schraubenkopf an der Außenfläche des unteren Schenkels des Stoßfängerträgers 1 zur Anlage kommt und die Schraube festgezogen werden kann. Der Zustand der abgeschlossenen Montage ist in Fig. 4 dargestellt.

Damit die Bewegungen der Gewindebolzen 3, 4 in entgegengesetzte Richtungen nacheinander auftreten, ist bei dem in der Zeichnung dargestellten Ausführungsbeispiel der Innendurchmesser der Mitnehmergummis 10 und 11 verschieden ausgebildet, so daß der Mitnehmergummi 11 durch den Schaft der Schraube 12 mitgenommen wird, während der Mitnehmergummi 10 einen größeren Innendurchmesser hat und erst durch einen verdickten Bereich der Schraube 12 mitgenommen wird, der an deren Kopfseite ausgebildet ist. Beim Einschrauben der Befestigungsschraube 12 geht der Schaft der Befestigungsschraube 12 daher zunächst glatt durch den Mitnehmergummi 10 hindurch, dieser wird erst dann erfaßt, wenn der verdickte Bereich der Schraube 12 hindurchtritt. Erst in diesem Bereich wird dann der Gewindebolzen 4 mitgedreht.

Die Kugelscheiben 7 und 8, die eine kugelsektorförmige Innenfläche haben, auf denen die Stirnfläche der Gewindebolzen 3, 4 aufliegt, die in ähnlicher Weise kugelsektorförmig ausgebildet ist, ermöglichen eine relative Schrägstellung des Stoßfängerträgers 1 zu der Längsachse der Gewindebolzen 3, 4 und damit einen Winkelausgleich.

Nachdem diese Einstellvorgänge ausgeführt sind, ist eine einwandfreie Verspannung der Befestigungsschraube 12 gewährleistet, wobei die Einstellelemente, das heißt die Gewindebolzen 3, 4 und die Kugelscheiben 7, 8, das Verbindungsglied zu den stoßenergieabsorbierenden Einrichtungen darstellen.

Die Funktion der einzelnen Bauteile der oben beschriebenen Vorrichtung ist somit die folgende: Der obere Gewindebolzen 3 sorgt für einen Toleranzausgleich im Verhältnis zwischen dem Stoßfängerträger 1 und dem stoßenergieabsorbierenden Element 2. Der untere Gewindebolzen 4 gleicht das erforderliche Differenzmaß in Abhängigkeit von der Lage des oberen Gewindebolzens 3 aus. Die Kugelscheiben 7, 8 bewirken den Winkelausgleich. Der Mitnehmergummi 11 im Gewindebolzen 3 sorgt dafür, daß die Drehbewegung der Befestigungsschraube 12 auf den Gewindebolzen 3 übertragen wird, was dadurch möglich ist, daß sein Innendurchmesser so abgestimmt ist, daß der Gewindebereich des Schalters der Befestigungsschraube 12 die Drehbewegung übertragen kann. Schließlich hat der Mitnehmergummi 10 im unteren Gewindebolzen 4 die Aufgabe, die Drehbewegung der Befestigungsschraube 12 auf den Gewindebolzen 4 zu übertragen, wobei sein Innendurchmesser so abgestimmt ist, daß der verdickte Bereich der Befestigungsschraube 12, der sich auf der Seite des Schraubenkopfes befindet, die Drehbewegung überträgt.

Die beiden Mitnehmergummis 10, 11 sind so abgestimmt, daß sie nur ein Anlegen der Kugelscheiben 7, 8 an die Innenwände des Stoßfängerträgers 1 und ein Anheben auf das Sollmaß ermöglichen, jedoch keine Verformungen des Stoßfängerträgers 1 hervorrufen können. Das heißt, daß bei Erreichen der Anlagefläche und damit bei Auftreten einer entsprechenden Gegenkraft sich die Befestigungsschraube 12 durch die Mitnehmergummis 10, 11 hindurchdreht.

Wie es in Fig. 5 im einzelnen dargestellt ist, sind die Kugelscheiben 7, 8 mit einer Montage- bzw. Verliersicherung ausgebildet, die aus einem im Abstand von der Kugelscheibe angeformten Ringelement besteht, das mit einem Innengewinde versehen ist. Ein flanschartiger Teil am Kopfende der Gewindebolzen 3, 4 ist mit einem dazu komplementären Außengewinde versehen, wobei die Dicke dieses Flanschteils kleiner als der Abstand des Ringelementes von der Kugelscheibe ist. Das Flanschteil am Kopfende der Gewindebolzen 3, 4 kann beispielsweise durch entsprechende ringförmige Aussparungen im Abstand von der Stirnfläche gebildet sein, wie es in Fig. 5 erkennbar ist. Bei einer derartigen Ausbildung wird die Kugelscheibe 7 oder 8 mit dem Innengewinde an dem angeformten Ring auf das Außengewinde des Flanschteils des Gewindebolzens 3, 4 und über dieses Flanschteil hinaus geschraubt, so daß es anschließend lose radial verschiebbar auf dem Kopf des Gewindebolzens 3 oder 4 sitzt. Da die Innenbohrung der Kugelscheiben 7, 8 größer als der Außendurchmesser der Befestigungsschraube 12 ist, kann eine Winkeleinstellung des Stoßfängerträgers 1 bezüglich der Längsachse der Befestigungselemente und damit ein Ausgleich von Winkeltoleranzen erzielt werden.

## Patentansprüche

1. Vorrichtung zum Anbringen eines ersten C-förmigen Bauteils (1) an einem zweiten Bauteil (2), insbesondere zum Anbringen eines Stoßfängerträgers am Rahmen eines Kraftfahrzeuges mit
- einem Einstellelement, das zwischen den beiden Schenkeln des ersten Bauteils (1) angeordnet und mit dem zweiten Bauteil (2) in einer Richtung von einem Schenkel zu dem anderen Schenkel des ersten Bauteils (1) versetzbar verbunden ist,
- einer Befestigungsschraube (12) mit Gegenmutter (9), mit der das Einstellelement am ersten Bauteil (1) befestigt wird,
- wobei das Einstellelement aus zwei hohlen Gewindebolzen (3, 4) besteht, die mit Ihren Außengewinden (5, 6) in entsprechende Innengewinde des zweiten Bauteils (2) geschraubt sind, und durch die die Befestigungsschraube (12) führt, wobei die Außengewinde (5, 6) der hohlen Gewindebolzen (3, 4) entgegengesetzte Gewinderichtungen haben, so daß sich beim Festschrauben mittels der Befestigungsschraube (12) zunächst bis zu einer gegebenen Gegenkraft ein Gewindebolzen (3) in Richtung auf einen der beiden Schenkel des ersten Bauteiles (1) und dann der andere Gewindebolzen (4) in Richtung auf den anderen Schenkel des ersten Bauteils (1) bewegt, **gekennzeichnet durch** Kugelscheiben (7, 8) mit einer im montierten Zustand flachen, an dem ersten Bauteil (1) anliegenden Stirnseite und einer gegenüberliegenden konkaven Stirnseite, die zwischen den Schenkeln des ersten Bauteils (1) und den beiden Gewindebolzen (3, 4) des Einstellelementes angeordnet sind, wobei die beiden Gewindebolzen (3, 4) des Einstellelementes jeweils eine zur konkaven Stirnseite der Kugelscheiben (7, 8) konvexe und an der konkaven Stirnseite der Kugelscheiben (7, 8) anliegende Stirnfläche aufweisen und der Durchmesser des Scheibenloches der Kugelscheiben (3, 4) größer als der Durchmesser des Gewindeteils der Befestigungsschraube (12) ist.

2. Vorrichtung nach Anspruch 1, **dadurch gekennzeichnet, daß** die Kugelscheiben (7, 8) mit einer Verliersicherung ausgebildet sind.

3. Vorrichtung nach Anspruch 1, **dadurch gekennzeichnet, daß** in den Gewindebolzen (3, 4) jeweils ein Mitnehmer (10, 11) vorgesehen ist, über den die Befestigungsschraube (12) ihre Drehbewegung auf die Gewindebolzen (3, 4) überträgt.

4. Vorrichtung nach Anspruch 3, **dadurch gekennzeichnet, daß** die Mitnehmer (10, 11) ringartige Gummimitnehmer sind.

5. Vorrichtung nach Anspruch 4, **dadurch gekennzeichnet, daß** der Gummimitnehmer (10) in dem Gewindebolzen, der sich bei einer Einschraubbewegung der Befestigungsschraube (12) zuerst bewegt, einen derartigen Innendurchmesser hat, daß er vom Gewindeteil der Befestigungsschraube (12) mitgenommen wird, während der Gummimitnehmer (11) im anderen Gewindebolzen einen Innendurchmesser hat, der größer als der Außendurchmesser des Gewindeteils der Befestigungsschraube (12) und so ausgebildet ist, daß er durch einen verdickten Bereich der Befestigungsschraube (12) an deren Kopfteil mitgenommen wird.

## Claims

1. An apparatus for fitting a first C-shaped component (1) to a second component (2), particularly for fitting a bumper beam to the frame of a motor vehicle, comprising
- an adjusting element which is disposed between the two limbs of the first component (1) and which is attached to the second component (2) so that it can be displaced from one limb towards the other limb of the first component (1),
- a fastening screw (12) with a counter-nut (9), with which the adjusting element is fixed to the first component (1),
- wherein the adjusting element consists of two hollow threaded studs (3, 4), the external threads (5, 6) of which are screwed into corresponding internal threads of the second component (2) and through which the fastening screw (12) is passed, wherein the external threads (5, 6) of the hollow threaded studs (3, 4) have opposite thread directions so that when they are screwed down by means of the fastening screw (12) one threaded stud (3) firstly moves towards one of the two limbs of the first component (1) until a given opposing force is encountered, and then the other threaded stud (4) moves towards the other limb of the first component (1), **characterised by** spherical washers (7, 8) which, in their installed state, have one flat end face which is seated against the first component (1) and an opposite, concave end face, and which are disposed between the limbs of the first component (1) and the two threaded studs (3, 4) of the adjusting element, wherein the two threaded studs (3, 4) of the adjusting element each comprise an end face which is convex in relation to the concave end face of the spherical washers (7, 8) and which is seated against the concave end face of the spherical washers (7, 8), and the diameter of the washer hole in the spherical washers (3, 4) is larger than the diameter of the threaded part of the fastening screw (12).

2. An apparatus according to claim 1, **characterised in that** the spherical washers (7, 8) are formed with an anti-loss retention device.

3. An apparatus according to claim 1, **characterised in that** a driver (10, 11) is provided in each of the threaded studs (3, 4), via which drivers the fastening screw (12) transmits its rotary movement to the threaded studs (3, 4).

4. An apparatus according to claim 3, **characterised in that** the drivers (10, 11) are annular rubber drivers.

5. An apparatus according to claim 4, **characterised in that** the rubber driver (10) first moves in the threaded stud which has an inside diameter such that on a screwing-in movement of the fastening screw (12) it is entrained by the threaded part of the fastening screw (12), whilst the rubber driver (11) in the other threaded stud has an inside diameter which is larger than the outside diameter of the threaded part of the fastening screw (12) and which is formed so that it is entrained by a thickened region of the fastening screw (12) on the head region thereof.

## Revendications

1. Dispositif de pose d'un premier composant (1) en forme de C sur un second composant (2), en particulier pour la pose d'un support de pare-chocs sur le châssis d'un véhicule automobile, comprenant :
- un élément de réglage qui est disposé entre les deux branches du premier composant (1) et est relié au second composant (2) en pouvant être déplacé dans une direction d'une branche par rapport à l'autre branche du premier composant (1),
- une vis de fixation (12) comportant un contre-écrou (9), vis de fixation au moyen de laquelle l'élément de réglage est fixé sur le premier composant (1),
- où l'élément de réglage se compose de deux écrous filetés creux (3, 4) qui, par leurs filetages extérieurs (5, 6), sont vissés dans des filetages intérieurs correspondants du second composant (2) et à travers lesquels passe la vis de fixation (12), où les filetages extérieurs (5, 6) des écrous filetés creux (3, 4) ont des directions de filetage opposées, de sorte qu'un écrou fileté (3), lors du vissage au moyen de la vis de fixation (12), se déplace d'abord jusqu'à une force antagoniste donnée, en direction de l'une des deux branches du premier composant (1), l'autre écrou fileté (4) se déplaçant en direction de l'autre branche du premier composant (1),
**caractérisé par** des rondelles sphériques (7, 8) comportant une face frontale plate venant en appui, à l'état monté, sur le premier composant (1), et une face frontale opposée concave, lesquelles rondelles sphériques sont disposées entre les branches du premier composant (1) et les deux écrous filetés (3, 4) de l'élément de réglage, où les deux écrous filetés (3, 4) de l'élément de réglage ont à chaque fois une face frontale convexe par rapport à la face frontale concave des rondelles sphériques (7, 8) et venant en appui sur la face frontale concave des rondelles sphériques (7, 8), et le diamètre du trou des rondelles sphériques (7, 8) est plus grand que le diamètre de la partie filetée de la vis de fixation (12).

2. Dispositif selon la revendication 1, caractérisé en que les rondelles sphériques (7, 8) sont conçues en ayant une sécurité les rendant imperdables.

3. Dispositif selon la revendication 1, caractérisé en qu'un élément d'entraînement (10, 11) est prévu, à chaque fois, dans les écrous filetés (3, 4), élément d'entraînement par lequel la vis de fixation (12) transmet son mouvement de rotation aux écrous filetés (3, 4).

4. Dispositif selon la revendication 3, caractérisé en que les éléments d'entraînement (10, 11) sont des éléments d'entraînement en caoutchouc de forme annulaire.

5. Dispositif selon la revendication 4, caractérisé en que l'élément d'entraînement en caoutchouc (10) de l'écrou fileté, qui se déplace en premier lors d'un mouvement de vissage de la vis de fixation (12), a un diamètre intérieur tel, qu'il est entraîné par la partie filetée de la vis de fixation (12), tandis que l'élément d'entraînement en caoutchouc (11), placé dans l'autre écrou fileté, a un diamètre intérieur plus grand que le diamètre extérieur de la partie filetée de la vis de fixation (12) et est conçu de manière telle, que l'élément d'entraînement est entraîné par une zone épaissie de la vis de fixation (12) au niveau de la partie formant la tête de la vis.
